(19) Europäisches Patentamt
European Patent Office
Office européen des brevets

(11) EP 2 740 710 A1

(12) EUROPEAN PATENT APPLICATION
published in accordance with Art. 153(4) EPC

(43) Date of publication:
**11.06.2014 Bulletin 2014/24**

(21) Application number: **12793026.1**

(22) Date of filing: **29.05.2012**

(51) Int Cl.:
***C01B 31/20*** *(2006.01)* ***B01J 23/42*** *(2006.01)*
***B01J 37/34*** *(2006.01)* ***C25B 1/00*** *(2006.01)*
***C25B 9/08*** *(2006.01)* ***C25B 11/03*** *(2006.01)*

(86) International application number:
**PCT/JP2012/003506**

(87) International publication number:
**WO 2012/164913 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2011 JP 2011122069**
**03.10.2011 JP 2011219485**

(71) Applicants:
- **Panasonic Corporation**
  **Osaka 571-8501 (JP)**
- **Japan Science and Technology Agency**
  **Kawaguchi-shi**
  **Saitama 332-0012 (JP)**

(72) Inventors:
- **SUZUKA, Michio**
  **(JP)**
- **KAMAI, Ryo**
  **(JP)**
- **NAKANISHI, Shuji**
  **(JP)**
- **YAMAKI, Takeyuki**
  **(JP)**
- **HASHIMOTO, Kazuhito**
  **Tokyo 113-8654 (JP)**
- **HELLER, Adam**
  **Austin, Texas 78712-0231 (US)**
- **ZHAO, Yong**
  **Tokyo 113-8654 (JP)**

(74) Representative: **Müller-Boré & Partner**
**Patentanwälte PartG mbB**
**Grafinger Straße 2**
**81671 München (DE)**

# (54) CARBON DIOXIDE ENRICHMENT DEVICE

(57) An object of the present application is to provide a carbon dioxide enrichment device that has high enrichment performance, and also enables a significant reduction in energy required during driving. Provided is a carbon dioxide enrichment device, comprising:
a first gas diffusion electrode 1;
a second gas diffusion electrode 2 separated from the first gas diffusion electrode 1;
an anion exchange membrane 5 located between the first gas diffusion electrode 1 and the second gas diffusion electrode 2; and
an electrolytic solution 3 existing between the first gas diffusion electrode 1 and the second gas diffusion electrode 2 to be in contact with the first gas diffusion electrode 1 and the second gas diffusion electrode 2 and to be partitioned by the anion exchange membrane 5,
wherein the electrolytic solution 3 contains a solvent and a solute dissolved in the solvent, and the solute is dissolved in the solvent to form a dissolved inorganic carbon containing at least one of carbonic acid, hydrogen carbonate ions, and carbonic acid ions; oxygen is consumed by an oxygen reduction reaction on the first gas diffusion electrode, whereby, a dissolved inorganic carbon is formed by a dissolution and ionization reaction of carbon dioxide in the solvent; the dissolved inorganic carbon derived from the solute or the dissolved inorganic carbon formed on the first gas diffusion electrode 1 is transported to the second gas diffusion electrode 2 through the anion exchange membrane 5; and oxygen is formed from the solvent in the vicinity of the second gas diffusion electrode 2 by an oxidation reaction of the solvent on the second gas diffusion electrode 2, and carbon dioxide is formed from the dissolved inorganic carbon.

Fig. 1

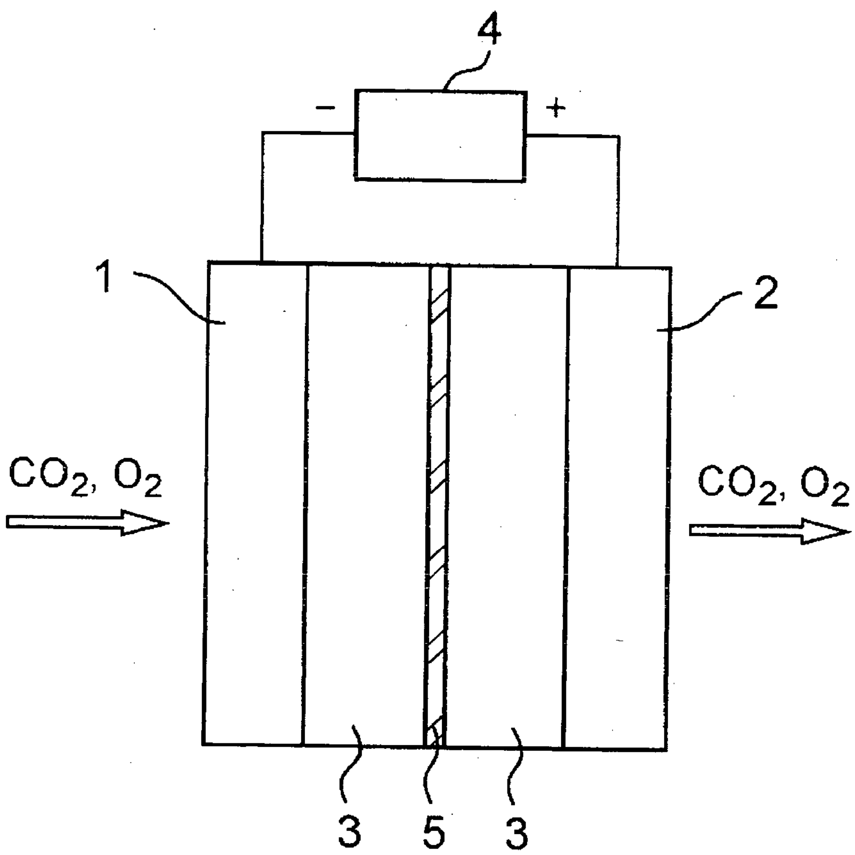

## Description

### Technical Field

The present invention relates to a device capable of enriching carbon dioxide by causing dissolution and release of carbon dioxide in an electrolytic solution utilizing an oxygen-generating/oxygen-reducing electrochemical reaction.

### Background Art

Carbon dioxide is a substance widely distributed on earth, accounting for 0.04% of the atmosphere, which is a compound widely used for industrial applications. Specific examples of industrial use of carbon dioxide include foaming gas for carbonated drinks, bath salts, and fire extinguishing agents; dry ice for cooling; and air for emergency replenishment of automobiles. Carbon dioxide in a supercritical state is also used as an extracting solvent for caffeine, and is further used in a laser that is used in the industrial field, and a carbonic acid gas laser that is used as a medical laser knife. It is also used as a substitute for a chlorofluorocarbon refrigerant in a $CO_2$ refrigerant compressor.

In the agricultural field, carbon dioxide is used as a carbon dioxide fertilizer for facilitating the growth of plants such as strawberry in forcing culture, and water plant in a water tank for admiration, and is also used in controlled atmosphere (CA) storage for fresh agricultural products.

As mentioned above, carbon dioxide has been popularly used, and there has hitherto been a technique of a carbon dioxide facilitated transport membrane utilizing a difference in a permeability rate of a porous polymer membrane as mentioned in Non-Patent Document 1, or a technique using a solid molten salt as mentioned in Patent Document 1, as a technique of enriching carbon dioxide. In the carbon dioxide facilitated transport membrane, there exists a need to pressurize a gas to high pressure of about 200 kPa or higher against the carbon dioxide facilitated transport membrane so as to enrich carbon dioxide, and to reduce the pressure of the side where the enriched gas permeates. Even in the case of the technique using a solid molten salt, there existed a need to maintain the device at high temperature of about 600°C so as to drive the device since the molten salt is used. As mentioned above, there has never existed a device capable of enriching carbon dioxide with low energy consumption without requiring a large-scale apparatus.

### Prior Art Documents

#### Patent Documents

Patent Document 1: JP 11-28331 A

#### Non-Patent Documents

Non-Patent Documents: R. Yegani et. al., J. Membr. Sci., 291, 157 (2007).

### Disclosure of the Invention

#### Problems to be Solved by the invention

The solutions reported in the above prior art documents require a great deal of energy, that is, there exists a need to apply heat during desorption (release) of carbon dioxide or to maintain high temperature during driving, and had a problem that it is impossible to achieve both enrichment performance of carbon dioxide and low energy consumption.

In light of the above circumstance, the present invention has been made and an object thereof is to provide a carbon dioxide enrichment device that has high enrichment performance, and also enables a significant reduction in energy required during driving.

#### Means for Solving the Problems

The carbon dioxide enrichment device according to the present invention is characterized by comprising: a first gas diffusion electrode functioning as a cathode; a second gas diffusion electrode separated from the first gas diffusion electrode functioning as an anode; an anion exchange membrane located between the first gas diffusion electrode and the second gas diffusion electrode; and an electrolytic solution existing between the first gas diffusion electrode and the second gas diffusion electrode to be in contact with the first gas diffusion electrode and the second gas diffusion electrode and to be partitioned by the anion exchange membrane, being characterized in that the electrolytic solution contains a solvent and a solute dissolved in the solvent, and the solute is dissolved in the solvent to form a dissolved inorganic

carbon containing at least one of carbonic acid, hydrogen carbonate ions, and carbonic acid ions; oxygen is consumed by an oxygen reduction reaction on the first gas diffusion electrode, whereby, a dissolved inorganic carbon is formed by a dissolution and ionization reaction of carbon dioxide in the solvent; the dissolved inorganic carbon derived from the solute or the dissolved inorganic carbon formed on the first gas diffusion electrode is transported to the second gas diffusion electrode through the anion exchange membrane; and oxygen is formed from the solvent in the vicinity of the second gas diffusion electrode by an oxidation reaction of the solvent on the second gas diffusion electrode, and also carbon dioxide is formed from the dissolved inorganic carbon. In other words, when a voltage is applied between the first gas diffusion electrode and the second gas diffusion electrode, and carbon dioxide and oxygen are introduced into the first gas diffusion electrode, a reaction occurs as shown in the below-mentioned [Chemical Formula 2] on this first gas diffusion electrode. $HCO_3^-$ formed by the scheme as shown in the [Chemical Formula 2] permeates through the anion exchange membrane and the electrolytic solution, whereby, a reaction occurs as shown in the below-mentioned [Chemical Formula 3] on the second gas diffusion electrode, and then carbon dioxide and oxygen are emitted from the second gas diffusion electrode.

[Chemical Formula 2] $CO_2 + H_2O \rightarrow H^+ + HCO_3^-$ $O_2 + 4H^+ + 4e^- \rightarrow 2H_2O$

[Chemical Formula 3] $2H_2O \rightarrow O_2 + 4H^+ + 4e^-$ $HCO_3^- + H^+ \rightarrow H_2O + CO_2$

As used herein, "dissolved inorganic carbon" means at least one selected from the group consisting of carbonic acid, hydrogen carbonate ions, and carbonic acid ions, formed by dissolving carbon dioxide in a solvent.

As used herein, "enrichment" means that the concentration of a specific gas is made higher than that in an initial state, and "carbon dioxide enrichment device" means a device capable of making the concentration of carbon dioxide higher than that in an initial state with high selectivity.

In the carbon dioxide enrichment device according to the present invention, a molar ratio of carbon dioxide and oxygen to be emitted from the second gas diffusion electrode is in the range of from 1:0.1 to 1:10. Whereby, it enables penetration of carbon dioxide while maintaining an influence of driving of the device on the oxygen concentration at low level.

In the carbon dioxide enrichment device according to the present invention, the anion exchange membrane is preferably a permselective membrane of monovalent ions. Whereby, it enables selective permeation of $HCO_3^-$, leading to achievement of high selective permeation of $CO_2$. Suppression of permeation of divalent anions facilitates the movement of monovalent anions $HCO_3^-$.

In the carbon dioxide enrichment device according to the present invention, an electrolytic solution on a first diffusion electrode (cathode) side partitioned by the anion exchange membrane preferably has a pH of 7 to 12, and also an electrolytic solution on a second diffusion electrode (anode) side partitioned by the anion exchange membrane preferably has a pH of 6 to 12, and a difference between the pH of the electrolytic solution on the first diffusion electrode side and that of the electrolytic solution on the second diffusion electrode side is preferably in the range of from -4 to -0.01. Whereby, a difference in concentration of $OH^-$ or $H^+$ arises between the electrolytic solution on the first diffusion electrode (cathode) side and the electrolytic solution on the second diffusion electrode (anode) side, and thus facilitating diffusion of anions $HCO_3^-$. As a result, it becomes possible to drive the device at lower applied voltage.

In the carbon dioxide enrichment device according to the present invention, an electrolyte of the electrolytic solution preferably contains any one of $Li^+$, $Na^+$, and $K^+$ as cations, and contains $HCO_3^-$ or $CO_3^{2-}$ as anions. Whereby, an electrode reaction corresponding to bias is likely to occur, and thus electrode overvoltage decreases and also selective $CO_2$ permeation occurs.

In the carbon dioxide enrichment device according to the present invention, the first gas diffusion electrode and the second gas diffusion electrode preferably comprise a polytetrafluoroethylene (PTFE) layer, a porous conductor, and an electrode catalyst, thus enabling to impart water repellency to an electrode surface, and to prevent moisture from flowing out of the device. Inclusion of an electrode catalyst enables suppression of overvoltage of a reduction reaction of oxygen, leading to a decrease in device driving voltage.

In the carbon dioxide enrichment device according to the present invention, the electrode catalyst contains a metal complex or a catalytic component of the metal complex, the metal complex containing any one of a polymer of one or more monomers selected from the group consisting of diaminopyridine, triaminopyridine, tetraaminopyridine, a diaminopyridine derivative, a triaminopyridine derivative, and a tetraaminopyridine derivative; or a modified product of the polymer; or a catalytic metal; and the electrode catalyst also satisfying at least one of the following (i) and (ii):

(i) the content of metal coordinated to a nitrogen atom, analyzed by X-ray photoelectron spectroscopy, is 0.4 mol% or more, and
(ii) the existence of metal coordinated to a nitrogen atom is recognized by X-ray photoelectron spectroscopy, and also the content of the nitrogen atom is 6.0 mol% or more.

In the carbon dioxide enrichment device according to the present invention, the electrode catalyst contains a polymer of one or more monomers selected from the group consisting of diaminopyridine, triaminopyridine, and tetraaminopyridine; or a fired metal complex obtained by firing a polymer metal complex composed of a catalytic metal; or a catalyst component of the fired metal complex.

In the carbon dioxide enrichment device according to the present invention, a specific surface area of the porous conductor is preferably 1 $m^2/g$ or more, in the BET adsorption measurement. The specific surface area is more preferably 30 $m^2/g$, still more preferably 100 $m^2/g$ or more, and yet more preferably 500 $m^2/g$ or more. Whereby, a reaction area in the electrode can be increased, thus enabling an increase in current density of an oxidation-reduction reaction of oxygen required to drive the device.

In the carbon dioxide enrichment device according to the present invention, the electrode catalyst may be platinum, nickel-doped carbon nanotube, tungsten oxide doped with copper or nickel, or titanium oxide.

In the carbon dioxide enrichment device according to the present invention, the electrolytic solution on at least one of the first diffusion electrode side and the second diffusion electrode side is a polymer gel electrolyte. Whereby, leakage of the electrolytic solution from the device can be suppressed, thus enabling a device having high durability.

In the carbon dioxide enrichment device according to the present invention, the electrolytic solution on the first diffusion electrode side contains a carbonic anhydrase catalyst facilitating a reaction of the below-mentioned [Chemical Formula 1]. Whereby, an ionization rate of Chemical Formula 1, thus enabling formation of $HCO_3^-$ at a higher rate.

[Chemical Formula 1] $$CO_2 + H_2O \rightarrow HCO_3^- + H^+$$

Effects of the Invention

According to the carbon dioxide enrichment device of the present invention, in the constitution including a first gas diffusion electrode; a second gas diffusion electrode; an anion exchange membrane located between the first gas diffusion electrode and the second gas diffusion electrode; and an electrolytic solution existing between the first gas diffusion electrode and the second gas diffusion electrode, that is partitioned by the anion exchange membrane; when a voltage is applied between the first gas diffusion electrode and the second gas diffusion electrode, and carbon dioxide and oxygen are introduced into the first gas diffusion electrode, a reaction occurs in this first gas diffusion electrode, as shown in the below-mentioned [Chemical Formula 2], and $HCO_3^-$ formed by the [Chemical Formula 2] or $CO_3^{2-}$ formed by ionization, or $H_2CO_3$ formed by equilibrium permeates through the electrolytic solution. Whereby, a reaction occurs in the second gas diffusion electrode, as shown in the below-mentioned [Chemical Formula 3], and thus discharging carbon dioxide and oxygen from the second gas diffusion electrode, leading to the achievement of carbon dioxide enrichment. Therefore, the carbon dioxide enrichment device exert an excellent effect capable of significantly reducing energy required during driving since it has high carbon dioxide enrichment performance and there is no need to heat during releasing carbon dioxide.

Accordingly, according to the present invention, it is possible to provide a carbon dioxide enrichment device that has high enrichment performance, and also enables a significant reduction in energy required during driving.

Brief Description of the Drawings

Fig. 1 is a schematic sectional view illustrating an embodiment of a carbon dioxide enrichment device according to the present invention.

Mode for Carrying Out the Invention

An embodiment of a carbon dioxide enrichment device is illustrated in Fig. 1. The carbon dioxide enrichment device includes a first gas diffusion electrode that functions as a cathode (gas diffusion electrode 1); a second gas diffusion electrode (gas diffusion electrode 2) disposed so as to be separated from the first gas diffusion electrode (gas diffusion electrode 1), that functions as an anode; an anion exchange membrane 5; and an electrolytic solution 3.

The anion exchange membrane 5 exists between the gas diffusion electrode 1 and the gas diffusion electrode 2 so as to be gas separated from the diffusion electrode 1 and the gas diffusion electrode 2. The electrolytic solution 3 swells the anion exchange membrane 5, and exists between the gas diffusion electrode 1 and the gas diffusion electrode 2. Namely, the gas diffusion electrode 1 and the gas diffusion electrode 2 are in contact with the electrolytic solution 3, and a gas and an electrolytic solution exist so that a three-phase interface of an electrode (solid phase), an electrolytic solution (liquid phase or solid phase), and a gas (vapor phase) containing carbon dioxide and oxygen is formed on a surface of the gas diffusion electrode 1 and the gas diffusion electrode 2, and thus enabling an electrode reaction due to the gas and the electrolytic solution.

The anion exchange membrane 5 is a membrane that enables selectively permeation anions, and particularly enables prevention of the movement of cations contained in a supporting electrolyte, or $H^+$ contained in the solvent. Whereby, unbalanced charge between an electrode 1 and an electrode 2 caused by an electrode reaction is compensated only by the movement of anions, thus facilitating the movement of $HCO_3^-$. Therefore, the movement of cations is suppressed by portioning the electrolytic solution 3 by the anion exchange membrane 5, thus achieving permeation of $HCO_3^-$ corresponding to an electrode reaction.

Any anion exchange membrane may be used as the anion exchange membrane 5 as long as it can exert a function that enables permeation of only anions, but does not enable permeation of cations. Examples thereof include NEOSEPTA AMX, AHA, and ACM manufactured by Tokuyama Corporation. Preferably, the anion exchange membrane is NEOSEPTA AMX manufactured by Tokuyama Corporation.

The gas diffusion electrode 1 and the gas diffusion electrode 2 have a structure including a catalyst layer made of a porous conductor, one surface of which is subjected to water repellent finishing, and the other surface of which includes an oxygen reduction catalyst support thereon.

The specific surface area of the porous conductor is preferably 1 $m^2/g$ or more, more preferably 30 $m^2/g$ or more, still more preferably 100 $m^2/g$ or more, and yet more preferably 500 $m^2/g$ or more, in the BET adsorption measurement. In case the specific surface area satisfies the above condition, a reaction area increases, thus enabling achievement of more $CO_2$ permeation amount. In case the specific surface area is less than 1 $m^2/g$, sufficient carbon dioxide enrichment performance is not attained because of a small area of the three-phase interface. In order to reduce voltage loss due to surface resistance of the porous conductor, the lower the surface resistance of the porous conductor, the better it is. The surface resistance is preferably 1 kΩ/□ or less, and more preferably 200 Ω/□ or less. Preferred examples of the porous conductor include a carbon sheet, a carbon cloth, and the like.

Water repellent finishing can be performed by coating a surface of a porous conductor with polytetrafluoroethylene (PTFE). This water repellent finishing enables the gas diffusion electrode 1 and gas diffusion electrode 2 to have a property capable of permeating a gas, but incapable of permeating water, and also the gas diffusion electrodes have a feature that the gas can diffuse to the catalyst layer.

The catalyst to be supported on the gas diffusion electrode 1 and the gas diffusion electrode 2 is particularly preferably a material that catalyzes an oxidation-reduction reaction of oxygen. Examples thereof include alloys or complexes containing at least one metal selected from transition metals capable of acting as an adsorption site of oxygen, such as Sc, Ti, V, Cr, Mn, Fe, Co, Ni, Cu, Zr, Nb, Mo, Ru, Rh, Pd, Ag, Ir, Pt, and Au; or compounds containing these metals as a dopant; carbon nanotube; and graphite. Of these catalyst carriers, Pt, Pt/Ru, and carbon nanotube are preferable because of having comparatively high performances in light of catalyst performance. Pt/Ru is more preferable. In this case, it is expected that resistance to CO (carbon monoxide) poisoning is improved to obtain a device having long-term stability.

Both the gas diffusion electrode 1 and the gas diffusion electrode 2 are disposed so that the side, on which a catalyst is supported, is in contact with the electrolytic solution 3, and that the side subjected to water repellent finishing is in contact with an external gas.

The gas diffusion electrode 1 and the gas diffusion electrode 2 are connected to a DC power 4 through an external circuit. It is necessary that DC voltage to be applied between the gas diffusion electrode 1 and the gas diffusion electrode 2 is a voltage that causes a reduction reaction of oxygen in the gas diffusion electrode 1 (cathode), and also causes an oxidation reaction of water in the gas diffusion electrode 2 (anode). When using water as the solvent of the electrolytic solution 3, the voltage is preferably a voltage that does not cause electrolysis of water so as to permanently operate the device, and is preferably a voltage not exceeding 1.2 V that is a voltage to be determined from free energy of a decomposition reaction of water, where no electrolysis does not theoretically occur. In case there is a loss such as IR drop of an electrode or an electrolyte, 1.2 V or higher voltage may be applied. In this case, the voltage is preferably 10 V or lower. The voltage is more preferably 5 V or lower, and still more preferably 2 V or lower.

The device is driven by supplying a gas containing carbon dioxide and oxygen to the gas diffusion electrode 1 from the external atmosphere such as atmosphere. Therefore, the gas diffusion electrode 1 may be provided so as to increase a contact area with the external atmosphere.

It is preferred that the gas diffusion electrode 1 and the gas diffusion electrode 2 are disposed oppositely each other. A distance between the gas diffusion electrode 1 and gas diffusion electrode 2, that face each other, is a distance wide enough to prevent mutual contact between electrodes so as to reduce voltage drop (IR drop) due to solution resistance as small as possible, and both electrodes are preferably disposed in proximity as close as possible. In case the electrolytic solution 3 has sufficiently high ion concentration and also has small solution resistance, it is possible to reduce voltage loss due to IR drop. If there is a fear that both electrodes may be in contact with each other by close proximity of both electrodes in terms of a structure of the device, a separator may be inserted between the gas diffusion electrode 1 and the gas diffusion electrode 2. This separator preferably has properties that make it to possible to contain an electrolytic solution 3, and also has insulating properties. In order to prevent diffusion properties of ions existing in the electrolytic solution 3 from causing deterioration, the higher the void ratio of the separator, the better it is.

The solvent is preferably a solvent that absorbs carbon dioxide to thereby cause ionization of carbon dioxide. Examples of such solvent are alcohols, an organic solvent, an ionic liquid, and the like, including water. Particularly preferred solvent is water, or a mixed solvent containing water.

The solute to be used in the electrolytic solution 3 is preferably a hydrogen carbonate or a carbonate of an alkali metal, or a hydrogen carbonate or a carbonate of an alkali earth metal. More specifically, the solute is $NaHCO_3$, $KHCO_3$, $LiHCO_3$, $Na_2CO_3$, $K_2CO_3$, or $Li_2CO_3$.

The pH of the electrolytic solution 3 is preferably from 5 to 14. In order to adjust the pH of the electrolytic solution 3, an alkali electrolyte is added to the electrolytic solution 3. Preferred examples of the electrolyte used to adjust the pH include NaOH, KOH, LiOH, and the like. In case the pH of the electrolytic solution 3 is lower than 5, the absorption rate of carbon dioxide drastically decreases and thus the absorption of carbon dioxide is a rate-limiting factor. As a carbon dioxide enrichment device is driven, the total inorganic carbon concentration in the electrolytic solution 3 decreases, resulting in deterioration of performance of the carbon dioxide enrichment device.

Regarding the pH of the electrolytic solution 3, an electrolytic solution on a first diffusion electrode 1 (cathode) side partitioned by the anion exchange membrane 5 preferably has a pH of 7 to 12, and also an electrolytic solution 3 on a second diffusion electrode 2 (anode) side partitioned by the anion exchange membrane 5 preferably has a pH of 6 to 12, and also a difference between the pH of the electrolytic solution 3 on the first diffusion electrode 1 side and that of the electrolytic solution 3 on the second diffusion electrode 2 side is preferably from -4 to -0.01.

In case the pH of the cathode side is lower than 7, the $CO_2$ absorption rate drastically decreases and $CO_2$ is less likely to be absorbed, leading to a decrease in the permeation amount.

In case the pH of the anode side is 6 or lower, the amount of $CO_2$ generated from the electrolytic solution 3 significantly increases and exceeds the adsorption amount on the anode side to thereby release $CO_2$, resulting in degradation of the electrolytic solution 3. Therefore, in order to stably drive, it is necessary that the pH of the anode side is 6 or higher.

The pH of both anode and cathode sides of the electrolytic solution 3 is preferably 12 or lower. In case the pH is 12 or higher, a current per unit area decreases due to an increase in viscosity of the solution, thus causing a phenomenon in which the permeation amount decreases.

A difference in the pH of the electrolytic solution 3 separated by an ion exchange membrane 5 is preferably from 0.01 to 4. The existence of the pH difference facilitates the movement of hydrogen carbonate anions existing in the electrolytic solution 3 of the cathode to the anode side.

It is considered that the principle of the movement of anions due to the pH difference is the same as that of a concentration cell, and that inside the device goes into a state where about 60 mV is applied per pH difference of 1.

In case the solute concentration is low, a supporting electrolyte may be dissolved in the solvent so as to improve ionic conductivity of the electrolytic solution 3. Preferred examples of the electrolyte include ammonium salts such as tetrabutylammonium perchlorate, tetraethylazanium hexafluorophosphate, imidazolium salt, and pyridinium salt; and alkali metal salts such as lithium perchlorate and potassium borofluoride. The electrolyte also includes salts containing an alkali metal or an alkali earth metal such as lithium, sodium, potassium or calcium, or an organic compound having an amino group as a cation, and a halogen ion such as chlorine or bromine, or sulfonium as an anion. In case the electrolytic solution 3 has sufficient ionic conductivity, there is no need to add a supporting electrolyte.

The electrolytic solution 3 may be gelled and fixed to a predetermined position, or may be formed of a gelled electrolytic solution (gelled electrolytic solution), or a polyelectrolyte. Examples of a gelling agent for gelling the electrolytic solution 3 include a gelling agent, a polymerizable polyfunctional monomer, and an oil gelling agent that utilize a technique such as a polymer or polymer crossliking reaction. Commonly used substances are applied as a gelled electrolytic solution and a polyelectrolyte, and preferred examples thereof include a vinylidene fluoride-based polymer such as polyvinylidene fluoride, an acrylic acid-based polymer such as polyacrylic acid, an acrylonitrile-based polymer such as polyacrylonitrile, a polyether-based polymer such as polyethylene oxide, a compound having an amide structure in the structure, and the like. In case the electrolytic solution 3 is gelled or fixed, the total inorganic carbon concentration of a gelled or fixed electrolytic solution in contact with the gas diffusion electrode 1 and a gelled or fixed electrolytic solution in contact with the gas diffusion electrode 2, that is calculated by [Equation 1], the pH of the electrolyte, presence or absence and kinds of the supporting electrolyte and the concentration thereof may be different. As the total inorganic carbon concentration becomes lower, a reverse reaction rate against an ionization reaction of an equilibrium reaction shown in [Chemical Formula 4] decreases. As the pH of the electrolytic solution becomes higher, an acid dissociation constant pKa value of an equilibrium reaction shown in [Chemical Formula 4] increases. Therefore, in order to facilitate absorption of $CO_2$ on the first gas diffusion electrode side and to facilitate generation of a $CO_2$ gas on the gas diffusion electrode 2 side, it is preferred to decrease the total inorganic carbon concentration and to increase the pH value in the gelled or fixed electrolyte in contact with the gas diffusion electrode 1 as compared with gelled or fixed electrolyte in contact with the gas diffusion electrode 2. In this case, a supporting electrolyte is preferably added to the gelled or fixed electrolyte having smaller ionic conductivity.

[Equation 1]

$$(\text{Total inorganic carbon concentration}) = [H_2CO_3] + [HCO_3^-] + [CO_3^{2-}]$$

[Chemical Formula 4] $CO_2 + H_2O \leftrightarrow H^+ + HCO_3^-$

In a state where a voltage is applied between a gas diffusion electrode 1 and a gas diffusion electrode 2 by a DC power 4, if a gas containing carbon dioxide and oxygen is supplied to the gas diffusion electrode 1, first, a dissolution and ionization reaction of carbon dioxide occurs on the gas diffusion electrode 1 side, as shown in the following scheme.

$$CO_2 + H_2O \rightarrow H^+ + HCO_3^-$$

Using hydrogen ions $H^+$ formed by this reaction, an oxygen-reducing electrochemical reaction occurs, as shown in the following scheme.

$$O_2 + 4H^+ + 4e^- \rightarrow 2H_2O$$

The higher the concentration of carbon dioxide existing on the gas diffusion electrode 1 side, the more the reaction amount increases, and the current value of the carbon dioxide enrichment device increases.

Subsequently, the hydrogen carbonate $HCO_3^-$ thus formed is partially ionized to form carbonic acid ions $CO_3^{2-}$, and also hydrogen carbonate $HCO_3^-$ is partially converted into carbonic acid $H_2CO_3$ by an equilibrium reaction. The thus formed hydrogen carbonate $HCO_3^-$, carbonic acid ions $CO_3^{2-}$, and carbonic acid $H_2CO_3$ diffuse to the gas diffusion electrode 2 side in the electrolytic solution 3 by concentration diffusion. Since hydrogen carbonate $HCO_3^-$, carbonic acid ions $CO_3^{2-}$, and carbonic acid $H_2CO_3$ exist in the electrolytic solution 3, they undergo concentration diffusion, together with ions and carbonic acid in the electrolytic solution 3.

In the vicinity of the gas diffusion electrode 2, hydrogen carbonate $HCO_3^-$ reaches the gas diffusion electrode 2 by phoresis due to concentration diffusion and an electrostatic force. On the gas diffusion electrode 2 side, an oxidation reaction of water as shown in the following scheme occurs to generate oxygen.

$$2H_2O \rightarrow O_2 + 4H^+ + 4e^-$$

This reaction causes an increase in the concentration of hydrogen ions $H^+$ in the vicinity of the gas diffusion electrode 2, leading to a decrease in pH. Since this pH change significantly shifts equilibrium among hydrogen carbonate $HCO_3^-$, carbonic acid ions $CO_3^{2-}$, and carbonic acid $H_2CO_3$ to the carbonic acid side, hydrogen ions $H^+$ react with hydrogen carbonate $HCO_3^-$ in the electrolytic solution 3 in such manner as shown in the following schemes to form carbon dioxide.

$$H^+ + HCO_3^- \rightarrow H_2CO_3$$

$$H_2CO_3 \rightarrow H_2O + CO_2$$

As a result, a mixed gas of oxygen and carbon dioxide is discharged from the gas diffusion electrode 2 side. In case the atmospheric concentration of carbon dioxide (0.04%) is supplied to a gas diffusion electrode 1, a ratio of oxygen:carbon dioxide is enriched to about 1:1 to 2:1.

In case the concentration of carbon dioxide on the gas diffusion electrode 2 side is high, a reverse reaction of equilibrium as shown in the following scheme is likely to occur, leading to an increase in overvoltage for causing a reaction on the gas diffusion electrode 2 side as an anode.

$$H_2O + CO_2 \rightarrow H^+ + HCO_3^-$$

Therefore, in order to increase the reaction amount at the same voltage, the lower the concentration of carbon dioxide on the gas diffusion electrode 2 side, the better it is. The concentration is preferably 5% or less. More preferably, the device is provided with equipment, that generates an atmospheric current to thereby always lower the concentration of carbon dioxide, on the gas diffusion electrode 2 side.

Describing in detail the above-mentioned dissolution of carbon dioxide as a gas in the electrolytic solution 3,

a reaction occurs first by a reaction as shown in the following scheme in which carbon dioxide molecules are surrounded by hydrated water.

$$CO_2\ (g) \rightarrow CO_2\ (aq)$$

Carbon dioxide dissolved in the electrolytic solution 3 is partially converted into carbonic acid by the addition of water molecules, as shown in the following scheme.

$$CO_2\ (aq) + H_2O\ (l) \rightarrow H_2CO_3\ (aq)$$

A rate constant at 25°C of a forward reaction of this equilibrium reaction is very low, for example, 0.039 $s^{-1}$, and a rate constant of a reverse reaction is 23 $s^{-1}$. Carbonic acid $H_2CO_3$ formed by the above reaction is ionized by an acid dissociation reaction to form hydrogen carbonate $HCO_3^-$ and hydrogen ions $H^+$, as shown in the following scheme.

$$H_2CO_3\ (aq) \rightarrow HCO_3^-\ (aq) + H^+\ (aq)$$

Hydrogen carbonate $HCO_3^-$ is further ionized by an acid dissociation reaction to form carbonic acid ions $CO_3^{2-}$. Carbonic acid $H_2CO_3$, hydrogen carbonate $HCO_3^-$, and carbonic acid ions $CO_3^{2-}$ are in an equilibrium state, and an existing ratio of the respective ions in the electrolytic solution 3 is determined by the pH.

In order to enhance carbon dioxide absorption capacity of the carbon dioxide enrichment device, the electrolytic solution 3 preferably contains a catalyst for a reaction capable of ionizing carbon dioxide and water into hydrogen carbonate $HCO_3^-$ and hydrogen ions $H^+$. Alternatively, it is preferred to support a catalyst for a reaction capable of ionizing carbon dioxide and water into hydrogen carbonate $HCO_3^-$ and hydrogen ions $H^+$, on a surface on which an oxygen reduction catalyst is supported, of the gas diffusion electrode 1. Preferred examples of the catalyst for a reaction capable of ionizing carbon dioxide and water into hydrogen carbonate $HCO_3^-$ and hydrogen ions $H^+$ include a carbonic anhydrase, a tetra-coordinated complex containing a zinc ion $Zn^{2+}$ in the center, and the like.

In the method of enriching carbon dioxide using the carbon dioxide enrichment device, since a mixed gas at a normal temperature supplied to a gas diffusion electrode 1 as a cathode is discharged from a gas diffusion electrode 2 as an anode at a normal temperature, and absorption of carbon dioxide into the device is performed in a chemical manner, and also movement in the device occurs by phoresis due to concentration diffusion and an electrostatic force, there is no need to introduce a great deal of energy. Therefore, it is possible to enrich carbon dioxide at low cost while suppressing energy consumption.

It is preferred to use, as the electrode catalyst in the present invention, a carbon-based catalyst using no platinum. Cost reduction of the device can be expected by using no platinum. Herein, the catalyst using no platinum will be described in detail.

1. Electrode Catalyst

1-1. Summary

An electrode catalyst is characterized in that it contains a specific metal complex as a catalyst component, and also has oxygen reduction reaction (ORR) catalytic activity, durability, and corrosion resistance that are equal to or higher than those of a conventional electrode catalyst such as a Pt-based catalyst.

1-2. Constitution

An electrode catalyst contains, as a catalyst component, 1) a metal complex having specific physical properties, or 2) a metal complex obtained by subjecting a specific polymer metal complex to a firing treatment. The constitution of the electrode catalyst of the present invention will be specifically described below.

In the present invention, "metal complex" refers to a compound composed of a polymer and/or a modified product thereof, and a catalytic metal, ligands in the polymer or the modified product thereof being coordinately bonded with the catalytic metal.

As used herein, "fired metal complex" refers to a compound obtained by subjecting a polymer metal complex to a firing treatment. As used herein, "firing (treatment)" refers to a heat treatment at high temperature.

As used herein, "polymer metal complex" refers to the metal complex in a state of not being subjected to a firing treatment.

"Metal complex" as simply designated herein refers to the fired metal complex and the polymer metal complex regardless of whether it has already subjected to a firing treatment.

In the electrode catalyst of the present invention, an indispensable constituent functioning as a catalyst component is, as mentioned below, a metal complex composed of a specific polymer and/or a modified product thereof and a catalytic metal, or a fired metal complex obtained by firing a metal complex composed of a specific polymer and a catalytic metal. These metal complexes serving as indispensable constituents in the electrode catalyst of the present invention are comprehensively referred to as "2-4 aminopyridine polymer metal complex".

In the present invention, "2-4 aminopyridine polymer" is a generic name of a compound obtained by polymerzing monomers such as diaminopyridine ($C_5H_7N_3$), triaminopyridine ($C_5H_8N_4$) and/or tetraaminopyridine ($C_5H_9N_5$) "Polymer" as simply designated herein refers to "2-4 aminopyridine polymer" unless otherwise specified. "Modified product thereof" is a modified product of the polymer, which refers to a compound and an oligomer that are obtained by thermal decomposition of a polymer when a polymer metal complex is fired.

The diaminopyridine, triaminopyridine, and tetraaminopyridine are compounds in which hydrogen atoms (H) of pyridine ($C_5H_5N$) are respectively substituted with two, three or fours amino groups ($-NH_2$). The 2-4 aminopyridine polymer may be composed of a monomer alone or a combination of two or more monomers.

Examples of known position isomer of diaminopyridine include 2,3-diaminopyridine, 2,4-diaminopyridine, 2,5-diaminopyridine, 2,6-diaminopyridine, and 3,4-diaminopyridine; examples of known position isomer of triaminopyridine include 2,3,4-triaminopyridine, 2,3,5-triaminopyridine, 2,3,6-triaminopyridine, 2,4,5-triaminopyridine, and 3,4,5-triaminopyridine; and examples of known position isomer of tetraaminopyridine include 2,3,4,5-tetraaminopyridine, 2,4,5,6-tetraaminopyridine, and 2,3,5,6-tetraaminopyridine. Each monomer composing the 2-4 aminopyridine polymer may be any position isomer. The 2-4 aminopyridine polymer may be composed only of the same position isomer, or different two or more position isomers.

In case the 2-4 aminopyridine polymer is composed of two or more monomers and/or two or more position isomers, the position of each monomer and/or position isomer in the 2-4 aminopyridine polymer is not particularly limited as long as it is polymerizable. For example, it may be polymerized so that a combination of specific monomers is regularly repeated, or may be polymerized at random.

Regarding the polymer metal complex, a ligand included in the 2-4 aminopyridine polymer coordinates a catalytic metal. Examples of the atom (ligating atom) that can serve as a ligand in the polymer include a nitrogen atom of the pyridine ring and/or a nitrogen atom of an amino group. Diaminopyridine, triaminopyridine and tetraaminopyridine include three, four and five nitrogen atoms capable of serving as a ligand in a molecule. Therefore, the 2-4 aminopyridine polymer composed of these monomers contains a lot of nitrogen atoms. Accordingly, it can coordinate a lot of catalytic metals as compared with an electrode catalyst containing, as a base, a metal complex composed of a polymer that coordinates a conventional catalytic metal. According to this feature, the electrode catalyst of the present invention can have high oxygen reduction reaction (ORR) catalytic activity.

A preferred example of the 2-4 aminopyridine polymer includes "diaminopyridine polymer" in which only diaminopyridine is polymerized. The position isomer composing the diaminopyridine polymer is not particularly limited and is preferably 2,6-diaminopyridine and/or 2,3-diaminopyridine. The reason is that these position isomers can coordinate the catalytic metal in the polymer in a more stable manner since nitrogen atoms (N) are most proximally disposed each other. The diaminopyridine polymer is more preferably a 2,6-diaminopyridine polymer in which only a 2,6-diaminopyridine monomer is polymerized.

The chemical polymerization reaction, that causes bonding of the respective monomers composing the 2-4 aminopyridine polymer, is not particularly limited, and is preferably anionic polymerization. In case the polymer is a 2,6-diaminopyridine polymer, it is presumed that the polymer includes, for example, chemical structure(s) represented by the below-mentioned [Chemical Formula 5] and/or [Chemical Formula 6] through anionic polymerization of 2,6-diaminopyridine.

[Chemical Formula 5]

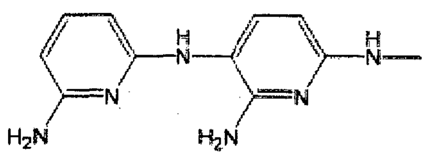

(I)

[Chemical Formula 6]

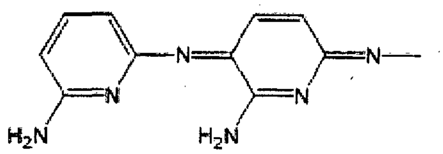

(II)

As used herein, "catalytic metal" is a metal atom or metal ion coordinated in a metal complex. In the 2-4 aminopyridine polymer metal complex as a catalyst component of the present invention, the catalytic metal is a substance that plays a role in direct catalytic activity. The catalytic metal is not particularly limited and is preferably a transition metal. Specific examples thereof include atoms of titanium (Ti), vanadium (V), chromium (Cr), manganese (Mn), iron (Fe), cobalt (Co), nickel (Ni), copper (Cu), zirconium (Zr), niobium (Nb), molybdenum (Mo), ruthenium (Ru), rhodium (Rh), palladium (Pd), silver (Ag), hafnium (Hf), tantalum (Ta), tungsten (W), rhenium (Re), osnium (Os), iridium (Ir), platinum (Pt), and gold (Au), or ions thereof. Persons skilled in the art may appropriately select a proper catalytic metal from these catalytic metals according to the intended purposes, taking cost, supply amount, catalytic activity efficiency, and the like into consideration. In the electrode catalyst of the present invention, the catalytic metal is preferably Cr, Mn, Fe, Co, Ni, and Cu. Of these electrode catalytic metals, Fe and Co are preferred. The metal complex may be obtained by coordinating a catalytic metal alone, or coordinating different two or more catalytic metals. It is considered that Pt and Au are rare and expensive and are therefore contrary to the object of the present invention. However, since use of them in a state of being coordinated in a metal complex enables relative reduction in use amount of Pt as compared with a known Pt-based catalyst, it is possible to achieve the object of the present invention. Therefore, they can be included in the catalytic metal in the present invention.

It is presumed to include, as the structure of the 2-4 aminopyridine polymer metal complex, a structure represented by the below-mentioned [Chemical Formula 7] in the case of a metal complex in which a 2,6-diaminopyridine polymer coordinates cobalt as a catalytic metal (Co-2,6-diaminopyridine polymer, which is often abbreviated herein to "CoDAPP").

[Chemical Formula 7]

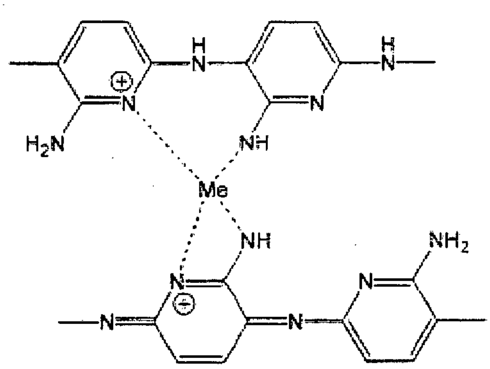

(III')

The 2-4 aminopyridine polymer metal complex of the present invention is preferably obtained by a firing treatment of a polymer metal complex. The reason is that a catalytic metal in the polymer metal complex is stably coordinates to a nitrogen atom by the firing treatment, and thus stable catalytic activity as well as high durability and corrosion resistance can be obtained by chemical hardening.

A mixing ratio of the 2-4 aminopyridine polymer to the catalytic metal salt in the 2-4 aminopyridine polymer metal complex may be selected so that a molar ratio of a raw monomer to a catalytic metal atom becomes 3:1 to 5:1, and preferably 3.5:1 to 4.5:1.

"Firing temperature" for firing treatment is from 650 to 800°C, preferably from 680 to 780°C, more preferably from 690 to 760°C, and still more preferably from 700 to 750°C. The firing treatment can be performed by a known method for a heat treatment of an electrode catalyst. For example, a powder of a dry polymer metal complex may be fired under a reducing gas atmosphere at the firing temperature for 30 minutes to 5 hours, and preferably 1 to 2 hours. It is possible to use, as a reducing gas, for example, ammonia.

As used herein, "specific physical properties" mean physical properties exhibited by the 2-4 aminopyridine polymer metal complex in the present invention, for example, at least one of the below-mentioned properties (i) and (ii)

obtained as a result in which coordaination of a catalytic metal to a nitrogen atom becomes stable in a polymer metal complex by firing the polymer metal complex:

(i) the content of metal coordinated to a nitrogen atom analyzed by X-ray photoelectron spectroscopy is 0.4 mol% or more, and
(ii) the existence of metal coordinated to a nitrogen atom is recognized by X-ray photoelectron spectroscopy, and also the content of the nitrogen atom is 6.0 mol% or more.

The content of metal coordinated to a nitrogen atom and the content of the nitrogen atom are measured by X-ray photoelectron spectroscopy. The content is the proportion thereof based on the metal complex (based on 100 mol% of the metal complex).
The 2-4 aminopyridine polymer may be partially modified by firing thereby to lose the form of a polymer. Such modification is permitted as long as a fired metal complex can be used as an electrode catalyst, and thus the 2-4 aminopyridine polymer metal complex composing the electrode catalyst of the present invention can contain a substance in which the 2-4 aminopyridine polymer was modified by firing.
There is no particular limitation on the shape of the fired metal complex. However, the larger the specific surface area per unit area of the electrode catalyst to be supported on a surface of an electrode, the better it is. The reason is that it is possible to more enhance catalytic activity (mass activity) per unit area of the electrode. Therefore, the shape is preferably a particle, and particularly preferably a powder. The specific surface area of the fired metal complex is preferably 100 $m^2$/g or more, more preferably 400 $m^2$/g or more, and still more preferably 500 $m^2$/g or more. Such specific surface area can be measured by a nitrogen BET adsorption method.
The electrode catalyst containing a metal complex can contain a catalyst component other than the above-mentioned fired metal complexes. For example, known catalysts such as a CoTMPP catalyst may be contained.

1-3. Effects

According to the electrode catalyst, it is possible to coordinate a catalytic metal in a larger amount than that in the case of an electrode catalyst derived from a metal complex, which contains a conventional polymer and a catalytic metal. Whereby, it is possible to have ORR catalytic activity and durability, that is equal to or higher than, that of a known electrode catalyst such as a Pt-based catalyst or a CoTMPP catalyst, and to reduce the use amount thereof.
Since inexpensive metal such as Fe can be used as the catalytic metal in place of Pt, it is possible to provide an electrode catalyst at low production cost per unit mass, and also to cope with an increase in supply amount of resources caused by mass production of a fuel cell in future.

2. Method for Producing Electrode Catalyst

2-1. Summary

According to the present production method, an electrode catalyst can be produced at low cost.

2-2. Method

The method for producing an electrode catalyst includes (a) a polymerization step, (b) a polymer metal complex forming step, and (c) a firing step. The respective steps will be specifically described below.

(a) Polymerization Step

The "polymerization step" is the step of synthesizing a 2-4 aminopyridine polymer by anionic polymerization of diaminopyridine, triaminopyridine and/or tetraaminopyridine. Monomers to be polymerized may be used alone, or two or three kinds of monomers may be used in combination. There is no particular limitation on a mixing molar ratio of the respective monomers when a combination of two or more kinds of monomers is polymerized. Persons skilled in the art may appropriately select while taking catalytic activity into consideration. One example of preferred monomer use in the polymerization step includes diaminopyridine alone.
A position isomer of the respective monomers used in the polymerisation is not particularly limited, and is preferably a position isomer in which nitrogen atoms serving as a ligand in the monomer molecule are proximally located. For example, when the above-mentioned diaminopyridine is polymerized as the monomer, 2,3-diaminopyridine or 2,6-diaminopyridine in which nitrogen atoms (N) are most proximally located are preferable among position isomers of diaminopyridine.

In the present step, the monomer is polymerized by an anionic polymerization reaction. The anionic polymerization reaction may be performed using a known method that is conventionally used in the relevant field. For example, the monomer is deprotonated by reacting with a strong base solution, and then polymerized by using the thus generated carbanions as a nucleophilic agent. Examples of the base used in the strong base solution include sodium hydroxide, potassium hydroxide, lithium hydroxide, calcium hydroxide, and the like. The polymerization temperature and polymerization time are not particularly limited as long as the reaction proceeds. Usually, the present step can be achieved by reacting at a temperature of 5 to 40°C for about 5 to 48 hours.

After the polymerization reaction, a solvent is removed by centrifugation or filtration to recover a polymer. The recovered 2-4 aminopyridine polymer is preferably washed with water (including deionized water and distilled water), dried and then used in the subsequent step.

In case the 2-4 aminopyridine polymer, that has already been synthesized in advance, is used in the above method for producing an electrode catalyst, production is started from the subsequent polymer metal complex forming step without performing the present step.

(b) Polymer Metal Complex Forming Step

The "polymer metal complex forming step" is the step of mixing the 2-4 aminopyridine polymer with a catalytic metal salt to thereby coordinate a catalytic metal to the polymer to form a polymer metal complex. A nitrogen atom included in the 2-4 aminopyridine polymer serves as a ligand (ligating atom) and is coordinately bonded with the catalytic metal to form a polymer metal complex.

The "catalytic metal salt" is a salt of the catalytic metal to be coordinated in the metal complex, and specific examples thereof include a hydrochloride, a sulfate, a nitrate, a phosphate, an acetate, and the like of a catalytic metal. The catalytic metal in the present step may be metal having catalytic activity in the electrode catalyst and is not particularly limited, and is preferably a transition metal. Specific examples thereof include transition metals mentioned in the first embodiment. Among these salts, salts of Cr, Mn, Fe, Co, Ni, and Cu are suitable as the catalytic metal salt of the present step, and a catalytic metal salt of Fe or Co is particularly preferable. Specific examples thereof include iron chloride, iron nitrate, iron sulfide, cobalt nitrate, cobalt chloride, cobalt sulfate, and the like.

A mixing ratio of the 2-4 aminopyridine polymer to the catalytic metal salt may be selected so that a molar ratio of a raw monomer to a catalytic metal atom becomes 3:1 to 5:1, and preferably 3.5:1 to 4.5:1. Namely, the polymer may be mixed with the catalytic metal salt by selecting the mass of the polymer and the catalytic metal salt so that a ratio of (number of moles of a repeating unit composing the polymer):(number of moles of metal contained in the catalytic metal salt) falls within the above preferable range. These materials are mixed and dispersed in an appropriate solvent, followed by well stirring, thus making it possible to coordinate the catalytic metal or ions thereof in the 2-4 aminopyridine polymer. It is possible to use, as the medium, water, ethanol, propanol, or a mixed solution obtained by using them in combination, for example, a mixed solution of water and ethanol, or water and (iso)propanol. The mixing temperature and the mixing time are not particularly limited as long as the reaction proceeds. Usually, the present step can be achieved by reacting at a temperature of 50 to 70°C for about 30 minutes to 5 hours. In order to well mix the above two substances, ultrasonic mixing may also be performed.

When the reaction proceeds, the formed polymer metal complex is precipitated in the solvent in the form of a solid. After formation of the polymer metal complex, the solvent is removed by centrifugation, filtration, or vaporization to recover the polymer metal complex. In order to remove the uncoordinated catalytic metal, the polymer metal complex may be washed with water (including deionized water, and distilled water). The polymer metal complex thus recovered may be optionally powderized using, for example, a quartz mortar.

(c) Firing Step

The "firing step" is the step of firing the polymer metal complex obtained in the polymer metal complex forming step under a reducing gas atmosphere at high temperature to obtain a fired metal complex. The catalytic metal moves in the polymer metal complex during the present step to thereby prepare a high-durability electrode-active component in which a catalytic metal is coordinated in a stable manner.

The firing temperature is from 650 to 800°C, preferably from 680 to 780°C, more preferably from 690 to 760°C, and still more preferably from 700 to 750°C. Firing at this temperature enables preparation of a fired metal complex as a catalyst component having high oxidation-reduction reaction (ORR) catalytic activity and durability.

In the same manner as in the first embodiment, an ammonia gas can be used as a reducing gas.

The firing treatment can be performed by a known method for a heat treatment of an electrode catalyst. For example, a powder of a polymer metal complex may be fired under a reducing gas atmosphere at the firing temperature for 30 minutes to 3 hours, and preferably 1 to 2 hours.

After the firing treatment, the fired metal complex is preferably subjected to a pickling treatment (pre-leaching)

using a hydrochloric acid, nitric acid or sulfuric acid solution so as to remove an insoluble substance and an inert catalyst. After the pickling treatment, the fired metal complex is well washed with water (including deionized water and distilled water), recovered by centrifugation or filtration, and then dried, thus making it possible to obtain the objective fired metal complex.

The obtained fired metal complex is preferably powderized to form fine particles using a quartz mortar so as to increase a specific surface area.

The fired metal complex obtained in the present step is a catalyst component and, therefore, it can also be used as the electrode catalyst as it is.

2-3. Effects

According to the above electrode catalyst, it is possible to provide an electrode catalyst having oxidation-reduction reaction (ORR) catalytic activity, durability, and corrosion resistance, that are equal to or higher than those of known electrode catalysts such as a Pt-based catalyst and a CoTMPP catalyst, at low cost; and a comparatively simple production method thereof.

3. Conductive Carrier, Support, and Supporting Method

3-1. Conductive Carrier

The "conductive carrier" refers to a substance that has conductivity, and is also capable of supporting an electrode catalyst. The material is not particularly limited as long as it is a substance having the above-mentioned properties. Examples thereof include a carbon-based substance, a conductive polymer, a semiconductor, a metal, and the like.

As used herein, "carbon-based substance" refers to a substance containing carbon (C) as a constituent. Examples thereof include graphite, activated carbon, carbon powder (including, for example, carbon black, Vulcan XC-72R, acetylene black, furnace black, and denka black), carbon fiber (including graphite felt, carbon wool, and carbon woven fabric), carbon plate, carbon paper, carbon disk, and fine structure substances such as carbon nanotube, carbon nanohorn, and carbon naocluster.

As used herein, "conductive polymer" is a generic term of a polymer compound having conductivity. Examples thereof include aniline, aminophenol, diaminophenol, pyrrole, thiophene, paraphenylene, fluorene, furan, acetylene, or a single monomer including a derivative thereof as a structural unit, or a polymer of two or more kinds of monomers. Specific examples thereof include polyaniline, polyaminophenol, polydiaminophenol, polypyrrole, polythiophene, polyparaphenylene, polyfluorene, polyfuran, and polyacetylene.

Taking ease of availability, cost, corrosion resistance, durability, and the like into consideration, suitable conductive carrier is a carbon-based substance, and is not limited thereto in the present invention.

The carrier may be composed of a single kind of a carrier, or a combination of two or more kinds of carries. For example, it is possible to use a carrier using a carbon-based substance in combination of a conductive polymer, or a carrier using a carbon powder as the same carbon-based substance in combination of a carbon paper.

The shape of the carrier is not particularly limited as long as the shape is capable of supporting the electrode catalyst of the first embodiment on a surface. For the purpose of enhancing catalytic activity (mass activity) per unit mass in an electrode for fuel cell, the shape is preferably a powder or fiber shape having a large specific surface area per unit mass. The reason is that the carrier having a larger specific surface area can usually ensure a wider supporting area, and thus making it possible to enhance dispersibility of a catalyst component on a carrier surface and to support a larger amount of the catalyst component on a surface thereof. Accordingly, the shape of a fine particle like a carbon powder, and the shape of a fine fiber like a carbon fiber are suitable as the shape of the carrier. A fine powder having an average particle size of 1 nm to 1 μm is particularly preferable. For example, carbon black having an average particle size of about 10 nm to 300 μm is suitable as a carrier of the present step.

The carrier also includes a connection terminal with a conducting wire for connecting a fuel cell electrode with an external circuit.

3-2. Support

The "support" refers to a substance that itself has rigidity and is callable of imparting a fixed shape to the electrode for fuel cell of the present invention. In case the conductive carrier has a powder shape, it is impossible to retain a fixed shape of the electrode for fuel cell by using a conductive carrier including an electrode catalyst supported thereon alone. In case the conductive carrier is in a state of a thin layer, the carrier itself has no rigidity. In such case, a fixed shape and rigidity of the electrode are imparted by disposing a conductive carrier including an electrode catalyst

support thereon on a support surface.

However, the support is not an indispensable constituent of the electrode for fuel cell of the present invention. For example, in case the conductive carrier itself has a fixed shape and rigidity, like a carbon disk, it is possible to retain a fixed shape of the electrode for fuel cell by using a conductive carrier including an electrode catalyst support thereon. An electrolyte material itself may impart a fixed shape and rigidity to the electrode for fuel cell in some cases. For example, a thin layer electrode is bonded to both surfaces of a solid polymer electrolyte membrane in PEFC. In such case, a support is not necessarily needed. Accordingly, the support may be optionally added to the electrode for fuel cell of the present invention.

The material of the support is not particularly limited as long as the electrode has rigidity enough to retain a fixed shape. The material may be either an insulator or a conductor. Examples of the material as the insulation include glass, plastics, synthetic rubbers, ceramics, or papers or vegetative pieces (including, for example, wood piece), animal fragments (including, for example, ossicle, shell, and sponge) subjected to a waterproofing treatment or water repellent finishing. The support having a porous structure is more preferable since a specific surface area for bonding a conductive carrier including an electrode catalyst support thereon increases, thus enabling an increase in mass activity of the electrode. Examples of the support having a porous structure include porous ceramics, porous plastics, animal fragments, and the like. Examples of the material as the conductor include carbon-based substances (including, carbon paper, carbon fiber, and carbon bar), metal, conductive polymers, and the like. In case the support is a conductor, it can function as a support and a current collector by disposing a conductive carrier including an electrode catalyst support thereon on a surface thereof.

In case the electrode for fuel cell of the present invention includes a support, the shape of the support usually reflects the shape of the electrode for fuel cell. The shape of the support is not particularly limited as long as it can achieve the function of the electrode. The shape may be appropriately determined according to the shape of a fuel cell. Examples of the shape include approximately plate (including thin layer), approximately column, approximately sphere, or a combination thereof.

3-3. Methods

(1) Electrode Catalyst Supporting Method

It is possible to use, as the method of supporting an electrode catalyst on a conductive carrier, a method known in the relevant field. Examples thereof include a method of fixing a fired metal complex on a conductive carrier surface using an appropriate fixing agent. The fixing agent preferably has conductivity and is not particularly limited. It is possible to use, as the fixing agent, a conductive polymer solution prepared by dissolving the conductive polymer in an appropriate solvent, a dispersion of polytetrafluoroethylene (PTFE), and the like. Supporting of the electrode catalyst on a conductive carrier can be achieved by applying or spraying such fixing agent on a conductive carrier surface and/or an electrode catalyst surface to thereby mix them, or drying after impregnating in a solution of a fixing agent. It is also possible to use a method in which a conductive carrier and a fired metal complex are mixed in a solvent such as water, and then a base such as sodium hydroxide is added to thereby precipitate a fired metal complex on a conductive carrier surface, thus achieving supporting.

(2) Method for Formation of Electrode for Fuel Cell

It is possible to use, as the method for formation of an electrode for fuel cell, a method known in the relevant field. For example, a conductive carrier including an electrode catalyst supported thereon is mixed with a dispersion of PTFE (for example, Nafion (registered trademark; DuPont) solution) and the mixture was formed into an appropriate shape, followed by a heat treatment, thus enabling formation of an electrode for fuel cell. In case an electrode is formed on a surface of a solid polymer electrolyte membrane or an electrolyte matrix layer, like PEFC or PAFC, the mixed solution is formed into a sheet and a solution of a fluororesin-based ion exchange membrane having proton conductivity on a surface of the thus formed electrode sheet, to which a membrane is bonded, is applied or impregnated, and then the sheet is laid on both surfaces of the membrane, followed by hot pressing, thus bonding to the membrane. It is possible to use, as the fluororesin-based ion exchange membrane having proton conductivity, for example, Nafion, Filemion (registered trademark; Asahi Glass Co., Ltd.), and the like.

An electrode for fuel cell can be formed by applying a mixed slurry of the mixed solution on a surface of a conductive support such as a carbon paper, followed by a heat treatment.

The electrode may also be formed by applying a mixed ink or mixed slurry of a solution (for example, Nafion solution) of a proton conductive ion exchange membrane and a conductive carrier including an electrode catalyst supported thereon on a surface of a support, a solid polymer electrolyte membrane, or an electrolyte matrix layer.

3-4. Effects

According to the present invention, it is possible to provide an electrode catalyst having catalytic activity, durability and corrosion resistance, which are equal to or higher than those of a Pt-based catalyst, at low cost in a stable manner as compared with a conventional Pt-based catalyst.

The present invention is not limited to the above-mentioned embodiments and it will, of course, be understood that various modifications can be made without departing from the scope of the present invention.

Examples

The present invention will be specifically described by way of Examples.

[Example 1]

(Production of Gas Diffusion Electrode)

A commercially available carbon paper (porosity of 70%, thickness of 0.4 mm) was used as a conductive porous material. In order to improve gas diffusivity, a solution containing 30% by weight of polytetrafluoroethylene (PTFE) dispersed therein was applied on one surface of the carbon paper by a bar coater method, and then the resin was fixed to the carbon paper by firing in a nitrogen atmosphere electric furnace at a temperature of 340°C for 20 minutes, and thus allowing to undergo water repellent finishing.

A catalyst paste to be applied on the carbon paper was prepared in the following manner. In a zirconia pot for ball mill, a commercially available platinum-supported carbon black (supporting 10 wt% Pt/Vulcan XC-72) was dispersed in 50 mL of a mixed solvent (2-propanol/water = 1/1) so that the content of the carbon black becomes 100 mg. While stirring the dispersion, a commercially available PTFE was added dropwise and mixed in the form of a Polyflon dispersion (average particle size of 0.3 $\mu$m). PTFE was added so that a ratio of PTFE to the entire carbon black becomes 1:5. The above dispersion containing PTFE added therein was suction-filtered on the carbon paper, followed by heat sintering through firing in a nitrogen atmosphere electric furnace at a temperature of 340°C for 20 minutes to produce a porous gas diffusion electrode 1 and a gas diffusion electrode 2.

(Preparation of Electrolytic Solution)

Sodium hydrogen carbonate $NaHCO_3$ and sodium hydroxide NaOH were dissolved in ion-exchange water, and the pH value was variously changed under the condition where $NaHCO_3$ is saturated.

(Assembling of Device)

A gas diffusion electrode 1 and a gas diffusion electrode 2 were disposed oppositely each other, and an anion exchange membrane 5 (NEOSEPTA (registered trademark) AMX) was interposed into the space therebetween, and then the space was filled with an electrolytic solution 3. The electrolytic solution 3 was sealed so as not to contact with the open air through the gas diffusion electrode 1 and the gas diffusion electrode 2, and then these electrodes were connected to a DC power 4 so that the gas diffusion electrode 1 serves as a cathode and the gas diffusion electrode 2 serves as an anode. Thereby, the carbon dioxide enrichment device was obtained. In order to enable observation of the amount of carbon dioxide discharged from the gas diffusion electrode 2, a glass container with a tube (having a volume that can achieve 8 $mL/cm^2$) was attached to the gas diffusion electrode 2 side, and then sealed with an O-ring so as not to leak the discharged gas. A carbon dioxide detector (solid electrolyte sensor type, resolution of 0.01%) was attached to a pipe portion of the glass container so as not to leak the discharged gas. Room temperature and the temperature of the system were adjusted to 25°C.

The gas diffusion electrode 1 was connected to an anode of a DC power 4 and the gas diffusion electrode 2 was connected to a cathode, and the space between both electrodes was filled with the electrolytic solution 3 having a pH of 9.0 adjusted with NaOH, and then DC voltage of 1.2 V was applied between both electrodes. Discharge of carbon dioxide from the gas diffusion electrode 2 was confirmed by application of a voltage. The amount of carbon dioxide emitted from the gas diffusion electrode 2 was confirmed by measuring the concentration of carbon dioxide in the glass container attached to the gas diffusion electrode 2 using a carbon dioxide detector. The results are shown in Table 1. The emission amount was calculated by the following [Equation 2] .

[Equation 2]

(Amount of emissions per unit area) = (Concentration of carbon dioxide in glass container) × (Volume of glass container)/(Area of gas diffusion electrode 2 surrounded by glass container)

[Examples 2 to 4]

In the same manner as in Example 1, the pH of the electrolytic solution 3 was variously changed by the addition of NaOH and DC voltage of 1.2 V was applied between the gas diffusion electrode 1 and gas diffusion electrode 2. The amount of carbon dioxide emissions was confirmed by measuring the concentration of carbon dioxide in the glass container attached to the gas diffusion electrode 2 using a carbon dioxide detector. The results are shown in Table 1.

[Example 5]

In the same manner as in Example 1, except that the electrode catalyst in Example 1 was replaced by the below-mentioned electrode catalyst using no platinum in Example 5, examination was made.

<Example 1: Preparation of Electrode Catalyst>

(Test Example 1) Preparation of Co-2,6-diaminopyridine Polymer (CoDAPP) Catalyst)

A CoDAPP catalyst was prepared by the method according to the second embodiment of the present invention. A 2,6-diaminopyridine monomer (Aldrich Corporation) was mixed with an oxidizing agent ammonium peroxydisulfate (APS) (Wako Corporation) in a molar ratio of 1:1.5, followed by mixing. Specifically, 5.45 g of 2,6-diaminopyridine and 1 g of sodium hydroxide were dissolved in 400 mL of distilled water, and then 27.6 g of APS and 100 mL of water were added. The obtained mixture was stirred for 5 minutes and 2,6-diaminopyridine was polymerized at room temperature for 12 hours. After polymerization reaction, the obtained black precipitate was recovered by centrifugation at 3,000 rpm, and then washed three times with distilled water. The precipitate was dried under vacuum at 60°C for several hours to obtain a 2,6-diaminopyridine polymer.

Subsequently, 5.45 g of a 2,6-diaminopyridine polymer and 3.62 g of cobalt nitrate (Wako Pure Chemical Industries, Ltd.) were suspended in a solution of 150 mL of water and ethanol (in a mixing ratio of 1:1) so that a molar ratio of 2,6-diaminopyridine (raw monomer) to cobalt (catalytic metal atom) becomes 4:1. In the same manner, each amount of the 2,6-diaminopyridine polymer and cobalt nitrate was calculated from the molar ratio so that each molar ratio of 2,6-diaminopyridine to cobalt becomes 6:1, 8:1, and 10:1, followed by mixing. The suspension was subjected to ultrasonic mixing for 1 hour using sonicator ultrasonic probe systems (AS ONE Corporation) and stirred at 60°C for 2 hours, and then the solution was vaporized. The remaining powder of a polymer metal complex composed of 2,6-diaminopyridine polymer and cobalt was ground in a quartz mortar.

The polymer metal complex was fired under an ammonia gas atmosphere at 700°C for 1.5 hours. The obtained fired metal complex was subjected to an ultrasonic pickling treatment (pre-leaching) using a 12N hydrochloric acid solution for 8 hours, followed by removal of an insoluble substance and an inert substance and further well washing with deionized water. Finally, the fired metal complex as an electrode catalyst of the present invention was recovered by filtration and dried at 60°C.

[Comparative Example]

Table 1 shows the results obtained by comparing performance of the carbon dioxide enrichment device shown in Fig. 2 mentioned in Example 1 with carbon dioxide enrichment performance of the carbon dioxide facilitated transport membrane utilizing a difference in a permeation rate of a porous polymer membrane mentioned in Non-Patent Document 1, and carbon dioxide enrichment performance of a device using a solid molten salt mentioned in Patent Document 1.

Table 1

| | Cathode side pH | Anode side pH | Emission amount ($\mu$L/minute·cm$^2$) [25°C, 1 atom] |
|---|---|---|---|
| Example 1 | 8.3 | 8.3 | 12 |
| Example 2 | 6.2 | 10 | 19 |
| Example 3 | 11.3 | 11.3 | 13 |
| Example 4 | 6.2 | 7.6 | 8 |
| Example 5 | 8.3 | 8.3 | 14 |
| Comparative Example 1 | - | - | 6 |
| Comparative Example 2 | - | - | - (about 0) |

As is shown in the results, carbon dioxide enrich membrane performance was evaluated at normal temperature under normal pressure which is the most important matter of driving at low energy, and found that the device in the present invention has high enrichment performance. Namely, it has been found that both high carbon dioxide enrichment performance and low energy consumption can be achieved in Examples 1 to 3.

[Description of reference numerals]

1 First gas diffusion electrode (cathode)
2 Second gas diffusion electrode (anode)
3 Electrolytic solution
4 Power
5 Anion exchange membrane

## Claims

**1.** A carbon dioxide enrichment device, comprising:

a first gas diffusion electrode;
a second gas diffusion electrode separated from the first gas diffusion electrode;
an anion exchange membrane located between the first gas diffusion electrode and the second gas diffusion electrode; and
an electrolytic solution existing between the first gas diffusion electrode and the second gas diffusion electrode to be in contact with the first gas diffusion electrode and the second gas diffusion electrode and to be partitioned by the anion exchange membrane,
wherein the electrolytic solution contains a solvent and a solute dissolved in the solvent, and the solute is dissolved in the solvent to form a dissolved inorganic carbon containing at least one of carbonic acid, hydrogen carbonate ions, and carbonic acid ions; oxygen is consumed by an oxygen reduction reaction on the first gas diffusion electrode, whereby a dissolved inorganic carbon is formed by a dissolution and ionization reaction of carbon dioxide in the solvent; the dissolved inorganic carbon derived from the solute or the dissolved inorganic carbon formed on the first gas diffusion electrode is transported to the second gas diffusion electrode through the anion exchange membrane; and oxygen is formed from the solvent in the vicinity of the second gas diffusion electrode by an oxidation reaction of the solvent on the second gas diffusion electrode, and carbon dioxide is formed from the dissolved inorganic carbon.

**2.** The carbon dioxide enrichment device according to Claim 1, wherein a molar ratio of carbon dioxide and oxygen to be emitted from the second gas diffusion electrode is in the range of from 1:0.1 to 1:10.

**3.** The carbon dioxide enrichment device according to Claim 1, wherein the anion exchange membrane is a permselective membrane of monovalent ions.

4. The carbon dioxide enrichment device according to any one of Claims 1 to 3, wherein an electrolytic solution on a first diffusion electrode side partitioned by the anion exchange membrane has a pH of 7 to 12,
wherein an electrolytic solution on a second diffusion electrode side partitioned by the anion exchange membrane has a pH of 6 to 12, and
wherein a difference between the pH of the electrolytic solution on the first diffusion electrode side and that of the electrolytic solution on the second diffusion electrode side is in the range of from -4 to -0.01.

5. The carbon dioxide enrichment device according to any one of Claims 1 to 4, wherein an electrolyte of the electrolytic solution contains any one of $Li^+$, $Na^+$, and $K^+$ as cations, and contains $HCO_3^-$ or $CO_3^{2-}$ as anions.

6. The carbon dioxide enrichment device according to any one of Claims 1 to 5, wherein the first gas diffusion electrode and the second gas diffusion electrode comprise a polytetrafluoroethylene (PTFE) layer, a porous conductor, and an electrode catalyst.

7. The carbon dioxide enrichment device according to Claim 6, wherein the electrode catalyst contains a metal complex or a catalytic component of the metal complex, the metal complex containing any one of a polymer of one or more monomers selected from the group consisting of diaminopyridine, triaminopyridine, tetraaminopyridine, a diaminopyridine derivative, a triaminopyridine derivative, and a tetraaminopyridine derivative; or a modified product of the polymer; or a catalytic metal; and the electrode catalyst satisfying at least one of the following (i) and (ii):

(i) the content of metal coordinated to a nitrogen atom, analyzed by X-ray photoelectron spectroscopy, is 0.4 mol% or more, and
(ii) the existence of metal coordinated to a nitrogen atom is recognized by X-ray photoelectron spectroscopy, and the content of the nitrogen atom is 6.0 mol% or more.

8. The carbon dioxide enrichment device according to Claim 6, wherein the electrode catalyst contains a polymer of one or more monomers selected from the group consisting of diaminopyridine, triaminopyridine, and tetraaminopyridine; or a fired metal complex obtained by firing a polymer metal complex composed of a catalytic metal; or a catalyst component of the fired metal complex.

9. The carbon dioxide enrichment device according to any one of Claims 1 to 8, wherein the electrolytic solution on at least one of the first diffusion electrode side and the second diffusion electrode side is a polymer gel electrolyte.

10. The carbon dioxide enrichment device according to any one of Claims 1 to 9, wherein the electrolytic solution on the first diffusion electrode side contains a carbonic anhydrase catalyst facilitating a reaction of the below-mentioned [Chemical Formula 1]:

[Chemical Formula 1]

$$CO_2 + H_2O \rightarrow HCO_3^- + H^+.$$

Fig. 1

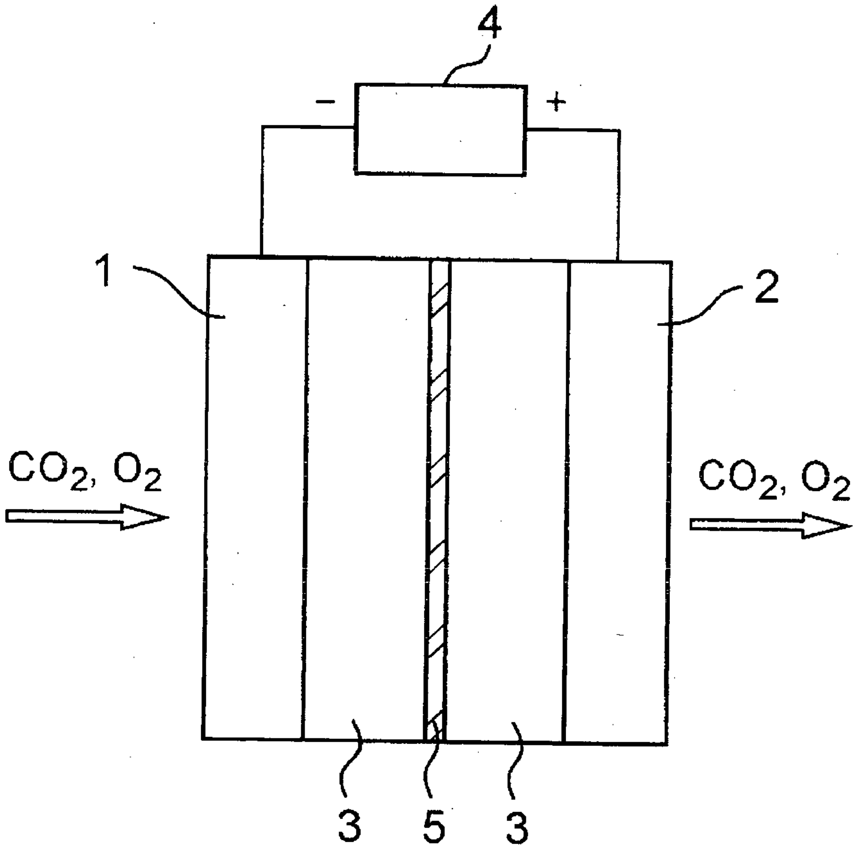

**INTERNATIONAL SEARCH REPORT**

International application No.
PCT/JP2012/003506

A. CLASSIFICATION OF SUBJECT MATTER
*C01B31/20*(2006.01)i, *B01J23/42*(2006.01)i, *B01J37/34*(2006.01)i, *C25B1/00*(2006.01)i, *C25B9/08*(2006.01)i, *C25B11/03*(2006.01)i

According to International Patent Classification (IPC) or to both national classification and IPC

B. FIELDS SEARCHED

Minimum documentation searched (classification system followed by classification symbols)
C01B31/20, B01J23/42, B01J37/34, C25B1/00, C25B9/08, C25B11/03

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2010-021141 A (Palo Alto Research Center Inc.), 28 January 2010 (28.01.2010), claims 1, 2; paragraphs [0011], [0018], [0024], [0026], [0033], [0040]; fig. 1 & US 2010/0005959 A1 & EP 2145668 A1 | 1-10 |
| A | JP 11-312527 A (Nippon Steel Corp.), 09 November 1999 (09.11.1999), claims; paragraph [0018]; fig. 1 (Family: none) | 1-10 |
| A | JP 2000-234190 A (Ishikawajima-Harima Heavy Industries Co., Ltd.), 29 August 2000 (29.08.2000), claims; fig. 1 (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 June, 2012 (20.06.12) | 03 July, 2012 (03.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/003506

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-099037 A (Mitsubishi Heavy Industries, Ltd.), 12 April 1994 (12.04.1994), paragraph [0013]; fig. 2 (Family: none) | 1-10 |
| A | JP 3-245811 A (Sumitomo Heavy Industries, Ltd.), 01 November 1991 (01.11.1991), page 4, lower left column, lines 12 to 16; fig. 5 to 6 (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11028331 A


### Non-patent literature cited in the description


- **R. YEGANI.** *J. Membr. Sci.,* 2007, vol. 291, 157